# EUROPEAN PATENT APPLICATION

(11) **EP 3 736 384 A1**
(43) Date of publication of application: **11.11.2020**
(21) Application number: 20173026.4
(22) Date of filing: 05.05.2020
(51) Int. Cl.: E03B 1/04, E04D 13/08

(54) **DRAIN HOPPER**

(30) Priority: 07.05.2019 GB 201906374
(71) Applicant: Pesky Products Limited, Leeds LS19 7XY (GB)
(72) Inventor: THORNE, Paul, Leeds, West Yorkshire LS19 7XY (GB)
(74) Representative: Orr, Robert

(57) **Abstract**

The present invention relates to a drain hopper for use in a grey water recycling system. The drain hopper includes an inlet for grey water, a primary water outlet through which water can flow from the drain hopper into a drainage system, a valve configured to seal the primary water outlet and prevent the flow of water therethrough, and an auxiliary water outlet through which water collected within the drain hopper when the primary water outlet is sealed can be diverted for use.

## Description

### FIELD OF THE INVENTION

The present invention relates to a drain hopper that facilitates the reuse of grey waste water, and a system that incorporates the drain hopper.

### BACKGROUND TO THE INVENTION

There are a number of technologies and products, including rainwater harvesting systems which enable end users to use less water. However, rainwater harvesting systems are redundant in times of drought.

Grey water, or sullage, refers to all wastewater from washbasins/sinks, showers, baths, washing machines and dish washers. Collection of grey water can be used around the home for purposes that do not require drinking water quality, such as toilet flushing or watering the garden. The recycling of grey water can have significant environmental and economic benefits.

Systems for recycling grey water are available but are often expensive, complex to install, and space consuming.

There is therefore a need for a grey water reuse system which is cheap to install, easy to use, and which can be retrofitted to existing grey water drainage systems.

### SUMMARY OF THE INVENTION

Aspects of the invention are set out in the accompanying independent and dependent claims. Combinations of features from the dependent claims may be combined with features of the independent claims as appropriate and not merely as explicitly set out in the claims.

According to a first aspect of the invention there is provided a drain hopper for use in a grey water recycling system, said drain hopper comprising:
an inlet for grey water,
a primary water outlet through which water can flow from the drain hopper into a drainage system,
a valve configured to seal the primary water outlet and prevent the flow of water therethrough, and
an auxiliary water outlet through which water collected within the drain hopper when the primary water outlet is sealed can be diverted for use.

The drain hopper may include a plurality of inlets for grey water. For example, the drain hopper may include a first inlet for grey water from a shower, and a second inlet for grey water from a bath.

The drain hopper may also include a further inlet for rainwater collected within guttering.

In some constructions of the drain hopper, the valve is a plug dimensioned for removable receipt within the primary water outlet.

In some constructions of the drain hopper, the primary water outlet is defined be a circular wall member extending outwardly from a base of the drain hopper. The plug may be a substantially spherical ball that is dimensioned for removable receipt within the circular wall member.

The drain hopper may be provided on a building at a height that is not readily accessible to an individual. For example, the drain hopper may be attached to the guttering of a house. In order to facilitate the movement of the plug into and out of a sealing connection with the primary water outlet, the plug advantageously includes an actuator that is accessible from outside the drain hopper, and preferably accessible at ground level.

The actuator may be a handle. The handle may be a pull cord.

In a first configuration, the plug is aligned with the primary water outlet but raised above it. The plug is secured in this raised position. Water is able to flow out of the drainage hopper via the primary water outlet. The primary water outlet may be connected to a drainpipe that is connected to the general wastewater system of the building, and which will in turn connect with the sewerage system.

When an individual wants to reuse water, for example to wash the car or water the plants, he/she can simply lower the plug into the primary water outlet. In this second configuration, the primary water outlet of the drain hopper is sealed by the plug. This prevents water from flowing through the primary water outlet. Instead, water will collect/build up within the drain hopper when a source of grey water (e.g., bath or sink) is emptied, and/or when rainwater is directed into the drain hopper via guttering. This collected water is redirected out of the drain hopper via the auxiliary water outlet.

In some constructions of the drain hopper, the auxiliary water outlet is an aperture formed in a wall of the drain hopper. Advantageously, the aperture is formed within the base of the drain hopper. This will ensure a constant flow of water out of the hopper under gravity, rather than requiring a certain level of water to build up before it reaches the outlet positioned on the side wall.

In some constructions, the auxiliary water outlet may include a valve that allows an individual to control the flow of the grey water out of the auxiliary water outlet. For example, if a user is filling a watering can, then a user can start and stop the flow of the collected water from the drain hopper using the valve. This prevents the unnecessary wastage of the grey water that would occur if it was not possible to regulate the egress of the water in this manner.

An example of a suitable type of valve is a plug or a bung that is dimensioned for receipt within the auxiliary water outlet.

It is envisaged that a length of tubing (e.g., a garden hosepipe) may be removably connectable to the auxiliary water outlet. Such tubing would allow a more directed and hence controlled flow of the grey water. The auxiliary water outlet may therefore be provided with suitable connection means. For example, a hose fitting.

It is also envisaged that in other constructions of the drainpipe hopper, a length of tubing is permanently connected to the auxiliary water outlet. This length of tubing may in turn be connectable to additional tubing (e.g., a hosepipe).

An example of a suitable type of valve for controlling flow of grey water out of the tubing of the auxiliary water outlet is a plug or a bung that is dimensioned for receipt within the free end of the tubing. Alternatively a tap such as a water butt tap with a hose lock fitting may be provided at the free end of the tubing.

The drainage hopper according to the present invention may be provided as part of the drainage system in new build properties, or may be easily retrofitted into the drainage system of existing properties.

According to a second aspect of the invention there is provided a drainage system comprising the drain hopper as defined in the first aspect of the invention.

### BRIEF DESCRIPTION OF THE DRAWINGS

Constructions of the drain hopper will be described hereinafter, by way of example only, with reference to the accompanying drawings in which like reference signs relate to like elements and in which:

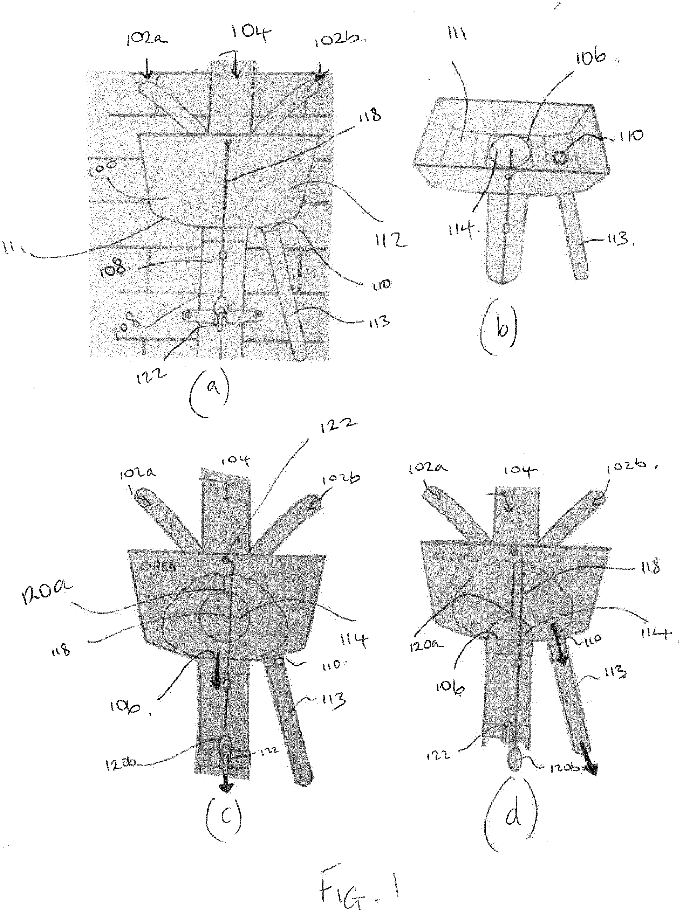

FIG. 1 a schematic of an exemplary construction of the drain hopper according to invention.

### DETAILED DESCRIPTION OF THE INVENTION

An exemplary constructions of the drain hopper is described in the following with reference to the accompanying drawings.

FIG. 1(a)-(d) shows a schematic of an exemplary construction of the drain hopper 100. The drain hopper includes two inlets 102a, 102b for grey water. Inlet 102a is an inlet for shower water. Inlet 102b is an inlet for bath water. The construction shown also includes an inlet 104 for rainwater collected within guttering.

The water can flow from the drain hopper directly into a drainage system 104 via a primary water outlet 106. In the construction shown the primary water outlet is a generally circular aperture formed within the base of the drain hopper.

In the construction shown, the drainage system includes a drain pipe 108 that is directed connected to the primary water outlet. This drain pipe will direct the water into the sewerage system.

The drain pipe hopper also includes an auxiliary water outlet 110. This auxiliary water outlet may also be provided within the base 111 of the drain hopper, as shown. In the construction shown the auxiliary water outlet is a generally circular aperture formed on the base on the drain hopper, to which is connected an externally located length of pipe 113.

It is however envisaged that the auxiliary water outlet may be provided on a side wall 112 of the drain hopper. The auxiliary water outlet 110 redirects the flow of water out of the drain hopper when the primary water outlet 106 is reversibly closed (via the use of a valve, as discussed below). The water may be directed into a storage device (e.g., a water butt), or into an appliance for subsequent use. The auxiliary water outlet 110 may be directly connected to a hose-pipe. The drain hopper thereby enables the reuse/recycling of grey water, and the use of rainwater.

The drain hopper may be provided with a plurality of auxiliary water outlets 110. For example, a first auxiliary water outlet may be connectable to a hose pipe, whilst a second first auxiliary water outlet may be connectable to a storage device (e.g., a water butt).

As shown in the top view of the drain hopper in FIG. 1B, the drain hopper includes a valve configured to seal the primary water outlet 106 and prevent the flow of water therethrough. In the construction shown the valve is a generally spherical plug 114 that is dimensioned for receipt within the top section of the primary outlet 106.

In the exemplary construction, the plug 114 may be moved into and out of a sealing relationship with the primary water outlet 106 by the use of an actuator, shown here in the form of a pull cord 118. A first end 120a of the pull cord 118 is attached to the plug 114. The pull cord extends from the inside of the drain hopper to the outside of the drain hopper via an aperture 122 provided in a side wall 112. A second end 120b of the pull cord is accessible on the outside of the drain hopper.

As shown in FIG. 1C when a user pulls on the pull cord 118, the plug 114 is moved into a raised position above the primary water outlet 106. In this configuration any water (i.e., grey water and rainwater) that enters the drain hopper flows directly, via the primary water outlet 106, into the drain pipe 108. A tethering means, shown here in the form of a hook 122, may be provided on an outer wall of the drainpipe. The pull cord can be tied about this hook, to ensure that the plug is retained in the raised position, when required.

As shown in FIG. ID, when a user wants to collect grey water and/or rainwater for reuse/recycling, the user simply unties the pull cord from the hook 122 (or releases the tension of the pull cord about the hook), thereby enabling the plug 114 to be lowered into the primary outlet 106. In this configuration the plug blocks the flow of water out of the primary water outlet by the formation of a water-tight seal. As such, any water that enters the drain hopper via the inlet(s) 102a, 102b, 104 collects/builds up within the drain hopper. This built-up water can then be redirected out of the drain hopper via the auxiliary water outlet 110.

Although particular constructions of the invention have been described, it will be appreciated that many modifications/additions and/or substitutions may be made within the scope of the claimed invention.

## Claims

1. A drain hopper for use in a grey water recycling system, said drain hopper comprising:
an inlet for grey water,
a primary water outlet through which water can flow from the drain hopper into a drainage system,
a valve configured to seal the primary water outlet and prevent the flow of water therethrough, and
an auxiliary water outlet through which water collected within the drain hopper when the primary water outlet is sealed can be diverted for use.

2. The drain hopper of claim 1, wherein the valve is a plug dimensioned for removable receipt within the primary water outlet to seal the primary outlet and prevent the flow of grey water therethrough.

3. The drain hopper of claim 2, wherein the plug is a spherical ball.

4. The drain hopper of claim 2 or 3, wherein the plug is provided with a handle for moving the plug from a first position in which the plug seals the primary water outlet and a second position in which the plug is removed from the primary water outlet.

5. The drain hopper of claim 4, wherein the handle is a pull cord.

6. The drain hopper of any preceding claim, wherein the drain hopper comprises a base, and wherein the primary outlet and the auxiliary outlet are provided on the base.

7. A drainage system comprising the drain hopper of any of claims 1 to 6.
